# EUROPEAN PATENT APPLICATION

(11) **EP 3 677 467 A1**
(43) Date of publication of application: **08.07.2020**
(21) Application number: 19150612.0
(22) Date of filing: 07.01.2019
(51) Int. Cl.: B60L 53/30, B60L 53/18, B60L 53/31, H02J 7/00

(54) **CABLE PULLBACK SYSTEM FOR ELECTRICAL VEHICLES CHARGING STATION**

(71) Applicant: Green Motion SA, 1052 Le Mont-Sur-Lausanne (CH)
(72) Inventor: CHAUDHURI, Toufann, 1110 Morges (CH); CUENIN, Yann, 1969 Saint-Martin (CH)
(74) Representative: Grosfillier, Philippe

(57) **Abstract**

The station (1) comprises at least one charging cable (2, 3) having a proximal end (4,5) electrically connected to the charging station (1) and a distal end (8,9) comprising an electrical connector (10,11) for connection to an electrical vehicle, wherein said cable is attached to said station by holding means (20,21), said holding means exerting a suitable force on the charging cable to allow a deployment of the cable and a retraction of the cable in a predetermined state via a return force exerted by said holding means, wherein said holding means comprises at least a pulley attached to the charging cable.

## Description

### TECHNICAL FIELD

The present invention concerns the field of charging stations for electrical vehicles.

More specifically, the present invention concerns the systems for holding the cables used in such charging stations.

### BACKGROUND ART

Charging stations for electrical vehicles are known in the art and such stations have certain specific problems and risks.

As discussed in the prior art, electric vehicles need to be connected to a charging station for charging via a charging cable. Usually, the charging cable is often fixedly connected to a charging station and is only plugged in at the electric vehicle by an operator or the driver/user.

In an alternative design, the charging cable may be connected to the electric vehicle in a fixed manner, in which case it is plugged in at the charging station for the charging operation.

In another variant, a free charging cable with two loose ends which is removed from a trunk of an electric vehicle and is then connected at both ends only for the charging operation is also conceivable.

Such charging cables have a certain length, typically comprised between 3 and 5 meters, in order to be able to achieve a connection with a charging station even in the case of electric vehicles which have been parked in an unfavourable location. The charging cables can be thin in a similar way to conventional electrical cables or can be relatively thick and rigid depending on the parameters of the charging method used (such as direct current/alternating current, level of the required charging current, etc.).

When the charging station is not in use, the cables must be stored. In a parking, if the cables are lying on the ground, there is a risk the cars will drive over the cables when parking. This can result in damage of the cable or the charging station, leading to a service interruption.

When the charging stations are installed on foot paths, next to public parking spaces, there is an additional risk that the pedestrian may trip on the cables lying on the ground. This can result in injuries and must be really avoided.

For low currents, spiral cables can be used thanks to low cable cross-section. Spiral allows to draw the cable back, like a spring, and consume limited space.

However, for high currents, conductors' section is too significant and does not allow the use of spiral cables.

In the case of charging stations for electric vehicles, one may provide short charging cables. In this case, however, the electrical vehicle needs to be parked precisely in the correct location at a short distance from the charging station which may render the passage around the vehicle difficult as the opening of the doors.

Alternatively, one may provide long charging cables. However, they get dirty when on the ground, they should avoid being damaged by vehicles rolling on them and they need to be wound and unwound by hand when not in use. A charging cable may be suspended on a holder, for example a drum of the charging station. As long as the charging cable is resting on the ground, there is a risk of people tripping.

As a solution, helical charging cables are known which can be extended when pulled. However, the tensile stress on such cables is reduced over time. Furthermore, helical cables can only be realized for relatively thin charging cables.

Moreover, cable drums per se are known for conventional electrical cables for a long cable to be wound onto said cable drums. An automatic reeling mechanism is also known, for example in vacuum cleaners, which makes it possible for an electrical cable to be pulled, the electrical cable then remaining in a desired position (i.e. length). For reeling, a pushbutton may be actuated or the cable is pulled for a short distance in order to release a lock and allow the cable to return in its wound position.

Finally, for safety reasons, such cables are normally disconnected from the main power supply when not connected to an electric vehicle. Therefore, the exposed cables present a low risk, high-reward target for theft due to the significant copper content and lack of dangerous voltages. In addition, in geographic locations that experience a harsh or unforgiving climate, prolonged exposure of the cables to outside environment can lead to dielectric breakdown, cracking of the insulation material, and other deleterious effects that can pose a safety hazard to human operators. Moreover, the long cable can become twisted or can pose a tripping hazard when it lies on the ground.

A solution is disclosed in publication US 2016/0121747 (corresponding to WO 2014/209261). The described system comprises a cable reel assembly in an electric vehicle supply equipment (EVSE) having a reel around which a cable is coiled. A shaft supporting the reel bears discs that rotate with the reel, and calipers coupled to the discs stop them and the reel from rotating. The power L1 and L2 conductors in the cable are electrically connected to the discs, and the calipers are electrically connected to the power source for the EVSE so that the calipers provide mechanical and electrical connection when actuated. Optionally, slip rings coupled to the shaft are connected to the control pilot and proximity signal conductors in the cable. Thus, during cable retraction, the control pilot and proximity signals are still provided to the EVSE, but the power conductors are decoupled from the power source. Only when the calipers are actuated to brake the discs is current flow permitted.

This known system is however complicated as it requires means that disable the electric connection when the cable is deployed before use or retracted after use. Moreover, an issue with cable reels is that this reduces cooling, causing overheating of the cables if not fully unrolled.

### SUMMARY OF THE INVENTION

An aim of the present invention is to provide a charging system that overcomes the problems of the prior art devices.

A further aim of the present invention is to provide a charging system that is simple and safe to use.

Among features and embodiments of the present invention, a proposed solution is to use a force pulley in order to have preferably a constant force applied to the cable which makes it easier to manipulate. Otherwise there is a risk of mis-manipulation by the end users, which could result in damage to the charging station or the car for instance. Of course, the force applied to the cable will depend on the system used.

In some embodiments, the invention concerns a charging station for electrical vehicles, said station comprising at least one charging cable having a proximal end electrically connected to the charging station and a distal end comprising an electrical connector for connection to an electrical vehicle, wherein said cable is attached to said station by holding means, said holding means exerting a suitable force on the charging cable(s) to allow a deployment of the cable(s) and a retraction of the cable(s) in a predetermined state via a return force exerted by said holding means, wherein said holding means comprises at least a pulley attached to the charging cable(s).

In some embodiments, the pulley(s) may be attached to the cable(s) by a cord for example directly fixed to the cable(s).

In some embodiments, the force exerted by the pulley(s) may be constant along the whole path of the charging cable(s) and may be independent of the cord length needed to connect a cable to a vehicle.

In some embodiments, the constant force is ensured by the use of a conical spring for example or by other equivalent means.

In some embodiments, an end of the holding means is attached at an upper side of the charging station.

In some embodiments, the cable connection to the charging station is located at a lower side of the charging station.

In some embodiments, the retracted cable(s) preferably forms an "S" shape in its(their) predetermined state.

In some embodiments, the station has an opening (i.e. one opening per cable) to let the cable(s) out for deployment, said opening starting from the lower part of the charging station.

Preferably, the opening extending upwards to a height approximately between 0.5m and 1.5m.

In some embodiments, at least one first outer roller is used to decrease the friction and is located at the top of said opening(s).

In some embodiments, at least one second outer roller is used to decrease the friction and is located on one side of said opening(s).

In some embodiments, at least one inner roller is located inside the station and used to decrease the friction on the cable(s) around inner components of the station.

In some embodiments, the station comprises two cables or more, for example four cables, which are connected and extending out to two opposing directions, the cables are crossing each other and connecting to the station in opposite directions.

In some embodiments, the cables are not crossing each other.

In some embodiments, the shape of the station is such that two cable openings are oriented with an angle between 0° and 90° to the front.

In some embodiments, the invention concerns a system comprising at least a charging station as defined in present application.

In some embodiments, the system further comprises at least an electrical vehicle that can be charged by a station as defined in the present application.

Other aims and features of the present invention are described in the following description.

### BRIEF DESCRIPTION OF THE DRAWINGS

Figure 1 illustrates a front view in partial cut of a station according to an embodiment of the present invention;
Figure 2 illustrates a top view in partial cut of a station according to an embodiment of the present invention.
Figure 3 illustrates a side view of a station according to an embodiment of the present invention.

### DETAILED DESCRIPTION

In an embodiment of the present invention as illustrated in the drawings, the station 1 comprises two charging cables 2, 3, each cable being connected at their proximal ends (i.e. "proximal end" meaning the end close to the station 1) 4, 5 to the station 1, specifically to the energy source of the station.

The connection is meant as an electrical one in the sense that it allows the cables 2, 3 to provide electrical energy to a user, as will be described in more detail hereunder.

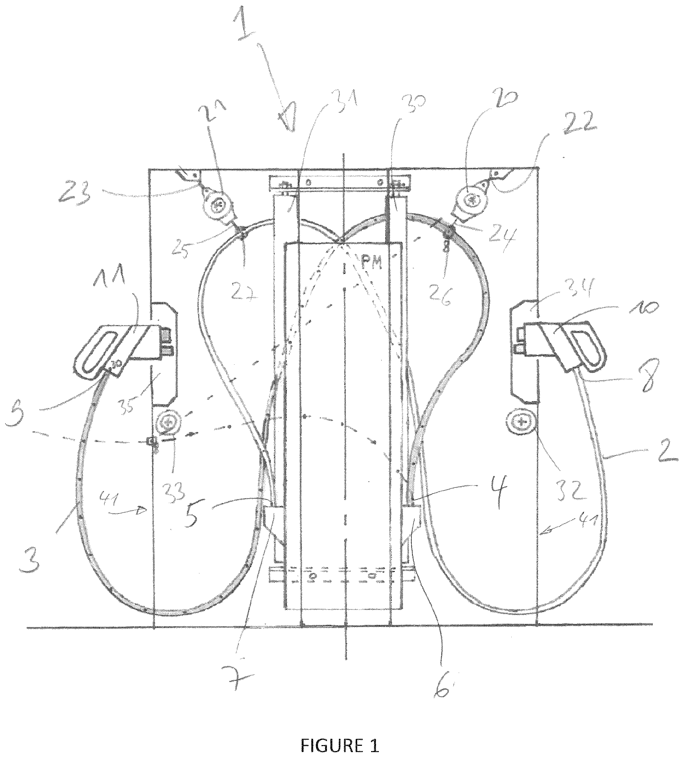

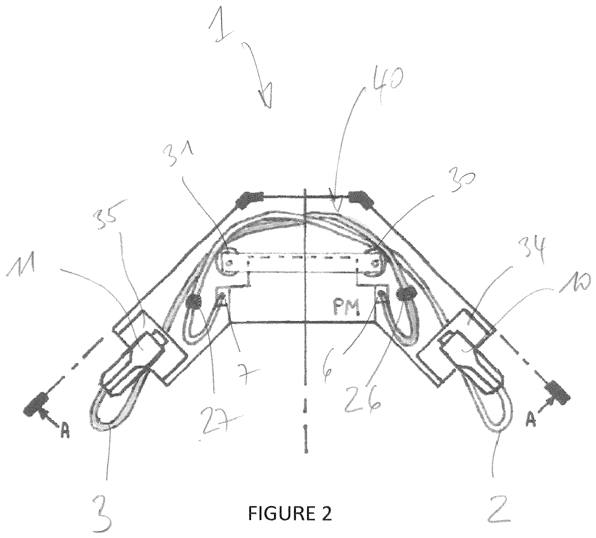

This connection to the station 1 through appropriate connecting means 6, 7 may be a detachable one, such that the cables 2, 3 may easily be disconnected at their proximal end, or a permanent one such the cables 2, 3 may not be disconnected, or a least not easily, for example to avoid a risk of theft or avoid their exchange by a non-habilitated person, or for safety reasons. In figure 1, cable 2 is illustrated as connected to connecting means 7 whereas cable 3 is illustrated as connected to connecting means 6 but this is only an example and the connections may be inverted (i.e. cable 2 to means 6 and cable 3 to means 7) for example to win some space in the station 1, for example in the free volume 40 as illustrated in figure 2. In the variant, the cables 2, 3 would not cross in the volume 40 and this space may be used for other purposes.

At a distal end 8, 9 ("distal end" meaning the end that is away from the station 1), each cable 2, 3 comprises connecting means 10, 11 for its electrical connection to a vehicle, in order to carry out the charging operation. The connecting means 10, 11 are typically standard connectors, used in the field of electrical charging means and stations for vehicles and adapted for their intended use.

Holding means 20, 21, such as a spring system, with a variable length are fixed to the station 1 with one end 22, 23 and are attached to the cables 2, 3 at their other end 24, 25. The holding means 20, 21 are for example a cable pullback system which comprises a pulley and a cord 24, 25 tied to the charging cable 2 or 3. Holding means 20, 21 are preferably installed in the upper part of the station 1, and apply a constant pullback force on the cords 24, 25 and to the attached cable thanks for example to a conical return spring mechanism. The construction may be inverted with the pulley being attached to the cable and the cord to the station.

In the present case, a constant force is a preferred non-limiting embodiment in order to have a constant force applied to the cable 2, 3. Otherwise there is a risk of mis-manipulation by the end users, which could result in damage to the charging station or the vehicle for instance. Of course, in other embodiments, it is possible to have a variable force.

Preferably, the electrical connection 6, 7 of the charging cable 2, 3 to the station 1 is arranged in the lower part of the station 1 to benefit of a maximum of cable length for the user. In a variant, the connection means 6, 7 are arranged in another part of the station 1, for example in (or next to) the middle or to the top (or next to the top).

The combination of the pulley 20, 21 (such as a force pulley) located in the upper part of the station 1 and the cable connection 6, 7 located in the lower part of the station 1 offers a maximum length when the charging cable is fully unrolled.

The cord 24, 25 is directly attached (at 26, 27) to the charging cable 2, 3 at a distance comprised between about 1m and 4m from the plug/connection 10, 11. This is of course only a non-limiting illustrative example and other dimensions may be used according to circumstances.

Moreover and preferably, the cable 2, 3 form a vertical S in the station as illustrated in figure 1 when the plug 10, 11 is in a rest position and not connected to a vehicle.

In embodiments, rollers 30-33 are installed in the station 1 in order to decrease the friction of the cable and facilitate the handling of the charging cable 2, 3. For example, vertical rollers 30, 31 may be placed vertically in the station and horizontal rollers 32, 33 may be placed where the cables 2, 3 exit the station 1. In a variant, for example when the cables do not cross in the free volume 40, the rollers 30, 31 may be absent.

Of course, other dispositions of rollers may be envisaged or additional ones may also be used in the frame of the present invention, for example depending on the configuration of the station 1 or the number of cables present in the station 1 (one, two or more).

The connecting means (such as plugs) 10, 11 may be stowed in dedicated spaces 34, 35 of the station 1 and held in place when not used for the sake of their protection for example.

These parts (such as rollers 30-33, space 34,35) are also necessary and useful to protect the insulation of the charging cable and its parts, increasing the lifespan of the system. Preferably, the rollers 30-33 are made of metal and/or are covered by a synthetic protection or other equivalent means to avoid influence on the cables.

The station contains a free volume on the rear side allowing the rolling/unrolling of the charging cable while respecting the radius of curvature of the charging cables. This free volume 40 is visible in figure 2. This free volume is preferably inside the station so that the cables 2, 3 when not in use are stowed away in a protected environment.

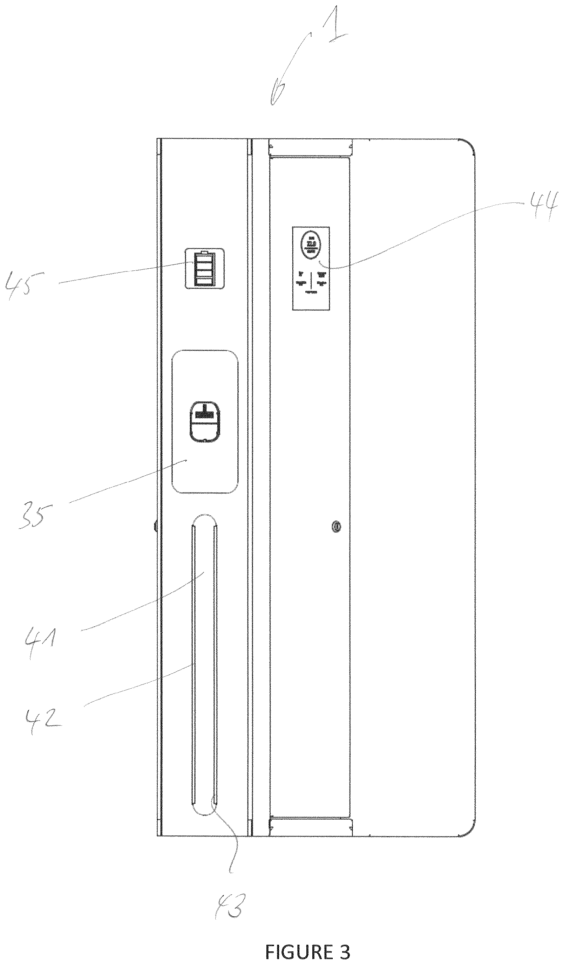

Preferably, the station 1 is a closed one with the cables being retracted in the station 1 when not in use. Accordingly, the station preferably comprises openings 41 (see figure 3) through which the cables extend when in rest position (figure 1) or when in use. These openings 41 may comprise vertical rollers 42, 43, in addition to rollers 32, 33 to facilitates unrolling of the cables 2, 3. The rollers 42, 43 may be made in the same manner of the rollers 32, 33 for example.

Preferably, the front side of the station is used for mounting of the equipment needed for the proper operation of the charging station, for example an interface 44 as illustrated in figure 3 that allows users to interact with the system and use the system.

When not in use, the cables 2, 3 are illustrated in figure 1 of the present application, the connectors 10, 11 being stored in the spaces 34, 35.

When the station is to be used, a connector 10 or 11 is taken by the user and connected to the intended vehicle. Depending on the position of the vehicle and of the position of the place where the connector has to be connected, the user pulls on the charging cable to reach the proper length. By doing so, the cable pulls the cord 24 or 25 which is unwound from the pulley 20 or 21.

Once the charging operation is finished, the user disconnects the cable 2 or 3 from the vehicle and the pulley will pull the cable back into the station in its predetermined "S" shape to the cable is protected again.

According to an embodiment, an indicator 45 (such as a charge indicator) may be used to indicated visually the level of charging of the vehicle.

The present specification is neither intended nor should it be construed as being representative of the full extent and scope of the present invention. The present invention is set forth in various levels of detail herein as well as in the attached drawings and in the detailed description of the invention and no limitation as to the scope of the present invention is intended by either the inclusion or non inclusion of elements, components, etc. Additional aspects of the present invention have become more readily apparent from the detailed description, particularly when taken together with the drawings.

Exemplary embodiments have been described to provide an overall understanding of the principles of the structure, function, manufacture, and use of the systems and methods disclosed herein. One or more examples of these embodiments are illustrated in the accompanying drawings. Those skilled in the art will understand that the systems and methods specifically described herein and illustrated in the accompanying drawings are non-limiting exemplary embodiments and that the scope of the present invention is defined not solely by the claims. The features illustrated or described in connection with one exemplary embodiment may be combined with the features of other embodiments. Such modifications and variations are intended to be included within the scope of the present invention. A number of problems with conventional methods and systems are noted herein and the methods and systems disclosed herein may address one or more of these problems. By describing these problems, no admission as to their knowledge in the art is intended. A person having ordinary skill in the art will appreciate that, although certain methods and systems are described herein with respect to a charging station, the scope of the present invention is not so limited. Moreover, while this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

In the preferred embodiment described above, the station 1 comprises two cables 2, 3 but it may present only one cable as well or more than two cables (three, four etc.), the principle of the invention being applicable to all these configurations. In another preferred embodiment, the station 1 comprises four cables. The charging cables in a station 1 may be the same or they may be different cables depending on the type of charging (AC; DC, single phase, three phases etc.) as is known in Standards of the art, as detailed herebelow as examples.

Typical standards are for example
-) US based Level 1 charging, level 2, AC Level 3, DC charging, Tesla Supercharger
-) charging mode of the International Electrotechnical Commission (IEC 62196): Mode 1, Mode 2, Mode 3, Mode 4

They may also carry different connectors/plugs.
In the art, there are for example four plug types:
Type 1- single-phase vehicle coupler - reflecting the SAE J1772/2009 automotive plug specifications
Type 2 - single- and three-phase vehicle coupler - reflecting the VDE-AR-E 2623-2-2 plug specifications
Type 3 - single- and three-phase vehicle coupler equipped with safety shutters - reflecting the EV Plug Alliance proposal
Type 4 - fast charge coupler - for special systems such as CHAdeMO

For Combined Charging System (CCS) DC charging which requires PLC (Powerline Communications), two extra connectors are added at the bottom of Type 1 or Type 2 vehicle inlets and charging plugs to connect high voltage DC charging stations to the battery of the vehicle. These are commonly known as Combo 1 or Combo 2 connectors.

For example, the stations may be arranged in a star fashion to allow the charging of several vehicles at the same time, such as four if one doubles the configuration of figures 1 and 2.

## Claims

1. A charging station (1) for electrical vehicles, said station comprising at least one charging cable (2, 3) having a proximal end (4,5) electrically connected to the charging station (1) and a distal end (8,9) comprising an electrical connector (10,11) for connection to an electrical vehicle, wherein said cable is attached to said station (1) by holding means (20,21), said holding means exerting a suitable force on the charging cable to allow a deployment of the cable and a retraction of the cable in a predetermined state via a return force exerted by said holding means, wherein said holding means comprises at least a pulley (21,22) attached to the charging cable(s) (2,3).

2. The charging station as defined in claim 1, wherein said pulley(s) (20,21) is(are) attached to the cable(s) (2,3) by a cord (24,25) directly fixed to the cable(s) (2,3).

3. The charging station as defined in claim 1 or 2, wherein the force exerted by the pulley(s) is constant along the whole path of the charging cable(s) and is independent of the cord length needed to connect a cable to a vehicle.

4. The charging station as defined in claim 3, wherein the constant force is ensured by the use of a conical spring.

5. The charging station as defined in one of the preceding claims, wherein one end of the holding means is attached at an upper side of the charging station (1).

6. The charging station as defined in one of the preceding claims, wherein the cable connection(s) (6.7) to the charging station (1) is located at a lower side of the charging station (1).

7. The charging station as defined in one of the preceding claims, wherein the retracted cable(s) (2, 3) form(s) an "S" shape in its predetermined state.

8. The charging station as defined in one of the preceding claims, wherein the station has at least one opening (41) to let the cable(s) out for deployment, said opening(s) starting from the lower part of the charging station (1) and extending upwards to a height approximately between 0.5m and 1.5m.

9. The charging station as defined in the preceding claim 8, wherein at least one first outer roller (32,33) is used to decrease the friction and is located at the top of said opening(s) (41).

10. The charging station as defined in one of the preceding claims, wherein at least one second outer roller (42,43) is used to decrease the friction and is located on one side of said opening(s) (41).

11. The charging station as defined in one of the preceding claims, wherein at least one inner roller (30,31) is located inside the station (1) and used to decrease the friction on the cable(s) around inner components of the station (1).

12. The charging station as defined in one of the preceding claims, wherein it comprises four charging cables (2,3).

13. The charging station as defined in one of the preceding claims, wherein the shape of the station (1) is such that two cable openings (41) are oriented with an angle between 0° and 90° to the front

14. A system comprising at least a charging station as defined in one of the preceding claims.

15. The system as defined in the preceding claim, further comprising at least an electrical vehicle that can be charged by a station as defined in one of claim 1 to 12.
